# FASCICULE DE BREVET EUROPEEN

(11) **EP 2 081 727 B1**
(45) Date de publication et mention de la délivrance du brevet: **27.06.2018**
(21) Numéro de dépôt: 07858656.7
(22) Date de dépôt: 24.10.2007
(51) Int. Cl.: B23K 11/31, B25J 15/04

(54) **GAMME DE PINCES A ENSERRER DES TOLES À BATIS IDENTIQUES, ET PINCE D'UNE TELLE GAMME.**
PRODUKTFAMILIE VON ZANGEN ZUM KLEMMEN VON BLECHEN MIT IDENTISCHEN RAHMEN SOWIE ZANGE AUS DIESER PRODUKTFAMILIE
FAMILY OF PLIERS FOR CLAMPING SHEET METAL HAVING IDENTICAL FRAMES, AND PLIER OF SUCH FAMILY

(30) Priorité: 26.10.2006 FR 0609434
(43) Date de publication de la demande: 29.07.2009
(73) Titulaire: ARO Welding Technologies, 72500 Château-du-Loir (FR)
(72) Inventeur: TIBERGHIEN, Olivier, 37540 St-Cyr-sur-Loire (FR); CHEVASSU, Daniel, 72500 Château-du-Loir (FR)
(74) Mandataire: Cabinet Plasseraud
(86) Numéro de dépôt international: PCT/FR2007/052237
(87) Numéro de publication internationale: WO 2008/050065

(56) Documents cités:
- EP-A1- 0 761 367
- EP-A2- 0 151 819
- WO-A1-2007/132132
- DE-A1- 10 249 201
- DE-A1- 19 801 652
- JP-A- 62 016 887

## Description

La présente invention concerne tout type de pinces destinées à enserrer des tôles et utilisées en association avec un bras manipulateur, dit robot. Ledit robot peut servir soit à déplacer une pince autour de l'assemblage de tôles à réaliser ou inversement à déplacer l'assemblage de tôles devant une pince, elle-même alors fixée à un pied rigide.

Plus particulièrement, cette invention concerne les pinces à souder par résistance électrique, du type général comprenant un bâti rigide, lié à un élément porteur tel que pied rigide ou robot manipulateur, un sous-ensemble dit articulation, lié au bâti et comportant lui-même un premier bras, dit fixe, dont est solidaire une première extrémité, dite fixe, un second bras, dit mobile, dont est solidaire une seconde extrémité, dite mobile, et un actionneur principal ou de soudage, prenant appui sur ledit bras fixe pour déplacer le bras (et l'extrémité) mobile(s) par rapport au bras (et à l'extrémité) fixe(s), suivant un premier degré de liberté, en translation ou en rotation, afin de fermer ou d'ouvrir la pince pour, respectivement, enserrer un assemblage de tôles à assembler entre les bras (et les extrémités) fixes et mobile(s) (rapproché(e)s l'un(e) de l'autre par l'actionneur) ou libérer l'assemblage de tôles, en écartant les bras (et les extrémités) l'un(e) de l'autre par l'actionneur.

Ci-dessous est décrit le principe d'une pince à souder dépourvue de fonction d'équilibrage/détalonnage telle que décrite dans la demande de brevet français N°06 04384 déposée au nom de la société ARO.

Toutefois, la problématique reste identique dans le cas de tout type de pinces servant à enserrer un assemblage de tôles et intégrant ou non un degré de liberté supplémentaire entre le bâti et le bras fixe afin d'assurer une opération d'équilibrage et détalonnage.

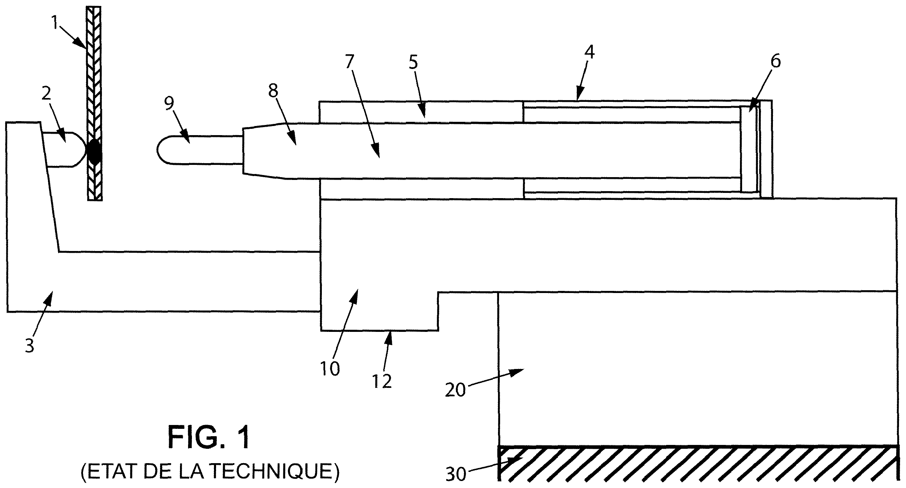

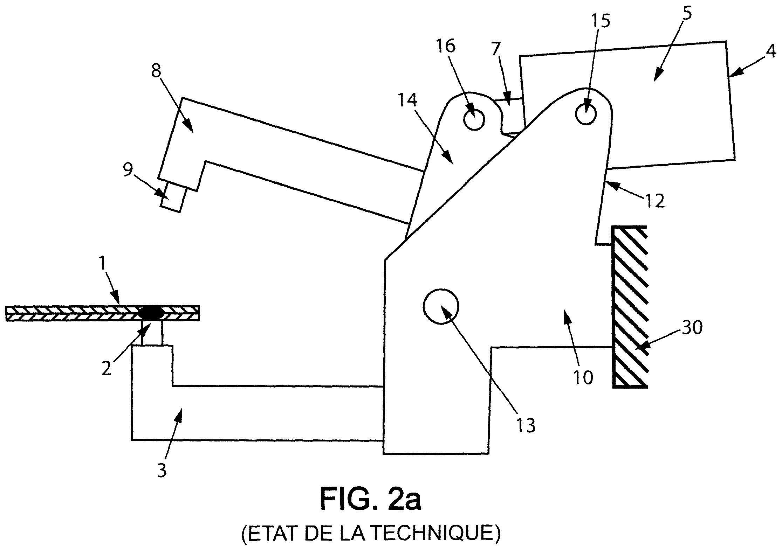

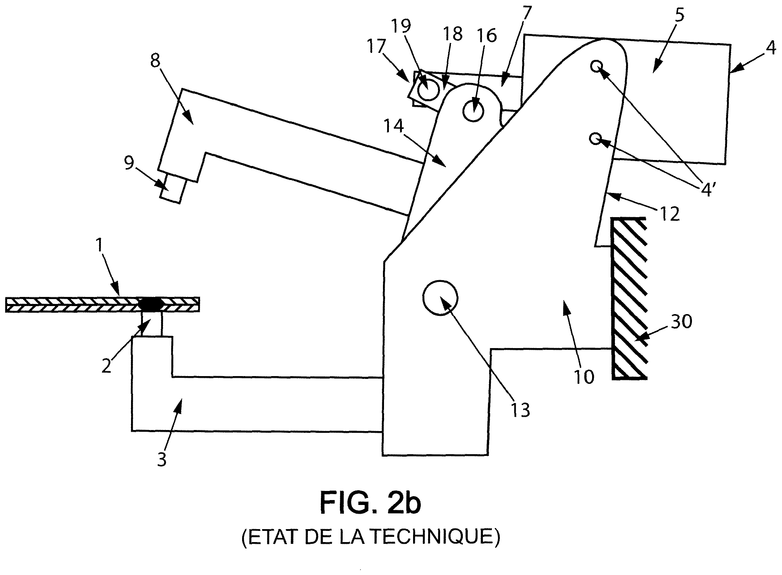

Sur les pinces à souder par résistance électrique de l'état de la technique, selon le travail à réaliser, deux cinématiques sont possibles pour le bras et l'extrémité mobiles :
- le premier degré de liberté est une translation du bras et de l'extrémité mobiles par rapport au bras fixe portant l'extrémité fixe, par un guidage linéaire assuré par l'actionneur de soudage, qui est un actionneur linéaire de tout type convenable connu, hydraulique, pneumatique, mécanique ou électrique, qui déplace directement le bras et l'extrémité mobiles, la pince étant alors dite en C ou en J, comme représentée sur la figure 1 annexée, ou
- le premier degré de liberté est une rotation du bras et de l'extrémité mobiles, autour d'un axe sur le bâti, par rapport au bras fixe portant l'extrémité fixe, la pince étant alors dite en X ou en ciseaux, l'actionneur de soudage pouvant encore être un actionneur linéaire, soit monté pivotant par son corps sur le bâti (figure 2a annexée) autour d'un axe parallèle à l'axe d'articulation du bras et de l'extrémité mobiles, soit fixé de façon rigide sur ce même bâti (figure 2b annexée), une liaison mécanique adéquate à 2 degrés de liberté permettant alors à la tige du vérin se déplaçant linéairement de suivre les mouvements de basculement du bras mobile autour de l'axe d'articulation. L'effort de pivotement du bras et de l'extrémité mobiles est transmis de l'actionneur au bras mobile par un levier, dont le bras mobile est solidaire, pivotant autour de l'axe d'articulation, et sur lequel pivote l'extrémité de la tige de l'actionneur, comme représenté sur les figures 2a et 2b annexées.

Sur les figures 1 à 11, les mêmes références désignent des composants identiques ou analogues sur les pinces en C et en X.

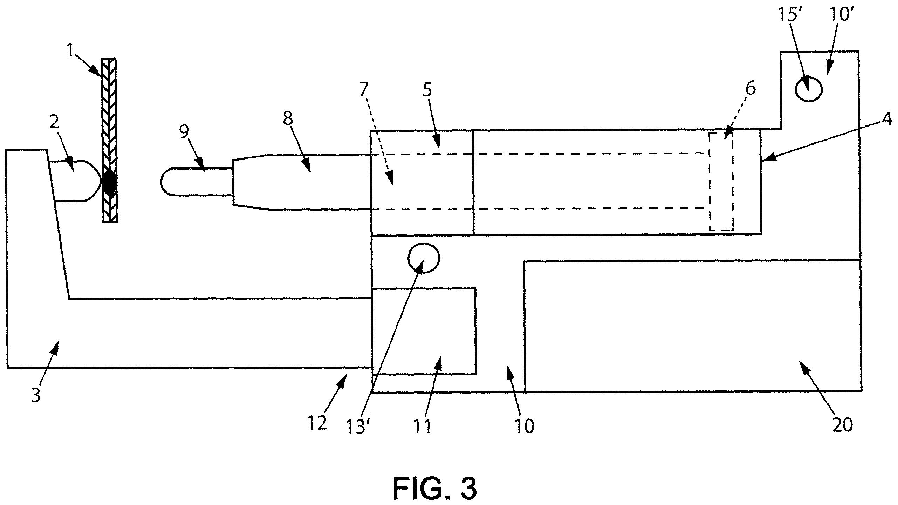

Pour assurer le soudage électrique par points d'un assemblage de tôles 1, les pinces en C de l'état de la technique selon la figure 1, comme celle de l'invention selon les figures 3, 4 et 5 comprennent principalement une électrode d'extrémité fixe 2 montée à l'extrémité d'un bras fixe 3 solidaire d'un bâti 10 support d'un actionneur de soudage 4, par exemple de type vérin pneumatique, dont le piston 6 et la tige 7 sont solidaires en déplacement d'un bras mobile 8, dans le prolongement de la tige 7, et dont l'extrémité libre supporte une électrode d'extrémité mobile 9. Ces composants constituent un sous-ensemble 12, dit articulation lié de façon rigide à un robot manipulateur ou un pied rigide, 30, dit élément porteur.

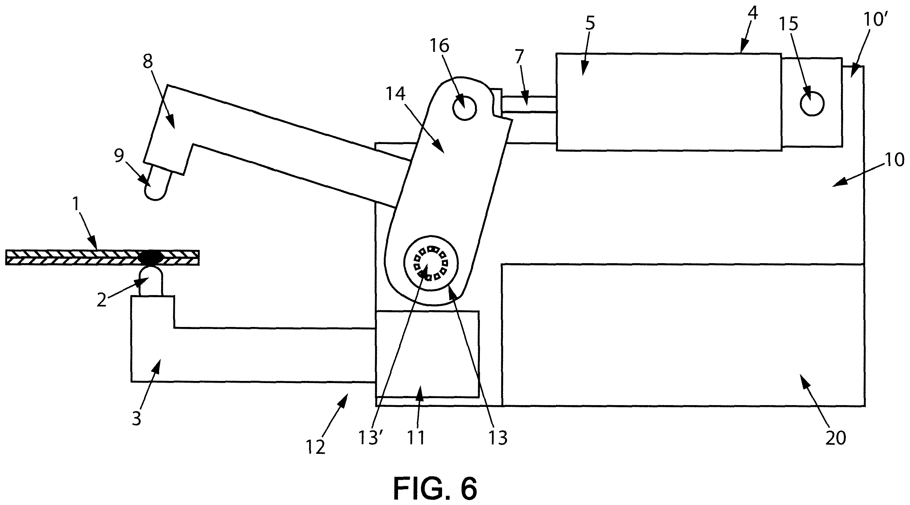

De même, sur les pinces en X de l'état de la technique selon la figure 2a, comme celle de l'invention selon les figures 6, 7 et 8, l'électrode d'extrémité fixe 2 et le bras fixe 3 sont solidaires d'un bâti 10 dans lequel est monté un axe de pivot 13 autour duquel pivote un levier rigide 14 supportant le bras mobile 8 et l'électrode d'extrémité mobile 9, l'actionneur de soudage 4, également linéaire, étant pivotant par son corps 5 sur le bâti 10 autour d'un axe 15 parallèle à l'axe 13, tandis que l'extrémité libre de la tige 7 de l'actionneur 4 actionne le levier 14, sur lequel la tige 7 pivote autour d'un axe 16 également parallèle à l'axe 13 et lié au bras de levier 14, de sorte à commander les pivotements du bras 8 et de l'extrémité 9 mobiles par rotation autour de l'axe 13 par rapport au bras 3 et à l'extrémité 2 fixes par rapport au bâti 10 de l'outil. De même que pour la pince en C décrite ci-dessus, ces composants constituent un sous-ensemble 12, dit articulation, lié de façon rigide à un robot manipulateur ou un pied rigide 30, dit élément porteur.

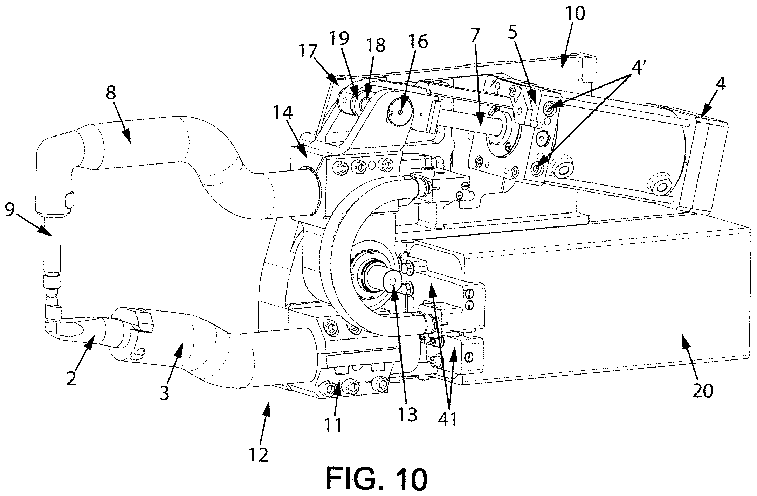

En variante de pince en X selon l'état de la technique et selon l'invention et telles que représentées respectivement sur les figures 2b et 10, la rotation du levier rigide 14 supportant le bras mobile 8 et l'extrémité mobile 9 autour de l'axe de pivot 13 est commandée par un actionneur de soudage 4 toujours linéaire, fixé de façon rigide par son corps 5 et les fixations 4', telles que des vis, sur le bâti 10. Une liaison mécanique 17 adéquate à 2 degrés de liberté, tel que par exemple un système de biellettes 18 monté à l'extrémité libre de la tige 7 et en rotation sur cette tige 7 par un premier axe 19 parallèle à l'axe 13 et par un second axe 16, également parallèle à l'axe 13, sur le bras de levier 14, de sorte à commander les pivotements du bras 8 et de l'extrémité 9 mobiles par rotation autour de l'axe 13 par rapport au bras 3 et à l'extrémité 2 fixes par rapport au bâti 10 de l'outil, lors des mouvements de translation de la tige 7 de l'actionneur de soudage 4. De même que pour les 2 variantes de pinces C et X décrites précédemment, ces composants constituent un sous-ensemble 12, dit articulation, lié de façon rigide à un robot manipulateur ou un pied rigide 30, dit élément porteur.

La liaison mécanique entre le sous-ensemble articulation 12, et l'élément porteur 30, peut être réalisée :
soit de façon directe comme sur les figures 2a et 2b, soit par l'intermédiaire d'un ou plusieurs composants constituant un assemblage rigide et faisant partie ou non de l'outil. La figure 1 représente la possibilité d'une liaison au moyen d'au moins un autre composant 20, rigide appartenant ou non à la pince.

Ce composant 20 peut être, par exemple, de façon non restrictive, un transformateur de soudage lorsque celui-ci est intégré à la pince, un changeur d'outils ou encore une cassette d'équilibrage telle que décrite dans la demande de brevet français N°06 04384 déposée au nom de la société ARO.

Le document DE 198 01 652 A1 décrit une pince à enserrer des tôles selon le préambule de la revendication 1 et utilisée en association avec un bras manipulateur, dit "robot" et comprenant un bâti rigide, lié (indirectement via un moyen d'équilibrage) à un élément porteur tel qu'un pied rigide ou ledit robot, un sous-ensemble dit "articulation" comportant un premier bras dit "fixe", un second bras dit "mobile", et un actionneur principal, prenant appui sur ledit bâti (à l'aide de tourillons et d'alésages) supportant ledit bras fixe, apte à déplacer le bras mobile par rapport au bras fixe, suivant un premier degré de liberté, en translation ou rotation, afin de fermer ou d'ouvrir la pince pour, respectivement, enserrer un assemblage de tôles entre les bras fixe et mobile ou libérer l'assemblage de tôles, et la pince appartient à une gamme de pinces comprenant des pinces avec une cinématique de type en C et des pinces avec une cinématique de type en X, le bâti étant de forme et d'aspect semblables pour toutes les pinces de ladite gamme de pinces.

Le document WO 2007/132132 décrit une pince à enserrer des tôles. Il fait partie de l'état de la technique selon l'Article 54(3) CBE. Ce document montre l'ensemble des caractéristiques de la revendication 1, à l'exception d'un second orifice 15'. Selon l'état de la technique, la conception des pinces à souder propose une grande diversité de bâtis, suivant le sous-ensemble articulation utilisé. Toutefois, aucune conception ne permet, pour une gamme de pinces comprenant des pinces en C et en X, l'utilisation d'un bâti de conception similaire permettant de créer, suivant les modèles de taille ou/et de cinématique différentes (C ou X), une synergie dans l'approvisionnement et la gestion de ce composant.

Un but de l'invention est de remédier à cet inconvénient, et de fournir des moyens de réaliser une pince et une gamme de pinces à enserrer des tôles qui conviennent mieux aux diverses exigences de la pratique que les pinces et gammes de pinces analogues de l'état de la technique.

A cet effet, l'invention propose une pince à enserrer des tôles selon la revendication 1.

Avantageusement, le bâti peut être utilisé comme moyen de fixation d'un support ou de tout autre composant ou assemblage de composants mécaniques permettant d'assurer une liaison rigide entre ledit bâti et l'élément porteur, tel qu'un bras manipulateur ou pied fixe rigide.

De manière connue en soi, la pince peut être dépourvue de fonction d'équilibrage/détalonnage.

Lorsque la pince est de type en X, sur laquelle la rotation d'un levier rigide supportant le bras mobile et son extrémité mobile autour d'un axe de pivot est commandée par ledit actionneur principal qui est linéaire, selon une première variante, ce dernier peut être pivotant par son corps sur le bâti autour d'un axe parallèle à l'axe de pivot, tandis que l'extrémité libre de la tige de l'actionneur actionne le levier, sur lequel la tige pivote autour d'un autre axe également parallèle à l'axe de pivot et lié au bras de levier, de sorte à commander les pivotements du bras et de l'extrémité mobiles par rotation autour de l'axe de pivot par rapport au bras et à l'extrémité fixes par rapport au bâti de la pince en X.

Selon une seconde variante de cette pince en X, l'actionneur principal linéaire est fixé de façon rigide par son corps et des fixations, telles que des vis, sur le bâti, une liaison mécanique à 2 degrés de liberté, tel qu'un système de biellettes monté en rotation sur l'extrémité libre de la tige par un premier axe parallèle à l'axe de pivot, et sur le bras de levier par un second axe également parallèle à l'axe de pivot, étant apte à commander les pivotements du bras et de l'extrémité mobiles par rotation autour de l'axe de pivot par rapport au bras et à l'extrémité fixes par rapport au bâti de la pince lors des mouvements de translation de la tige de l'actionneur principal.

En outre, dans le cas d'une pince en X, l'un au moins des axes de rotation (du levier rigide et de l'actionneur sur le bâti) peut être fixé sur le bâti par une seule de ses extrémités selon un montage en porte-à-faux.

Que la pince soit en C ou en X, le bâti peut être constitué d'un assemblage rigide de pièces, ou, en variante, peut être monobloc.

Sur les pinces des deux types de cinématique en C et en X, le bâti peut être utilisé pour le positionnement et la fixation des composants du sous-ensemble articulation, dont le bâti peut lui-même faire partie dans le cas d'une pince sans fonction d'équilibrage/détalonnage.

En outre, le bâti peut être utilisé pour le positionnement et la fixation d'autres composants de la pince ne faisant pas partie du sous-ensemble articulation.

En effet, dans ce cas, la pince peut être une pince modulaire, avec une pluralité de composants et/ou sous-ensembles autres que le bâti et qui sont communs aux différentes pinces de ladite gamme.

Il peut avantageusement s'agir de pinces à souder par résistance, auquel cas les extrémités respectivement des bras fixe et mobile sont des électrodes de soudage, un transformateur de soudage étant alors de préférence intégré à la pince et également fixé sur le bâti.

L'invention a également pour objet une gamme de pinces à enserrer des tôles qui se caractérise par le fait qu'elle comprend une pluralité de pinces telles que celle définie ci-dessus, dont au moins une pince est de type en C et au moins une autre de type en X, toutes les pinces de la gamme ayant des bâtis de forme et d'aspect semblables, et de préférence identiques.

L'invention porte plus particulièrement sur une gamme de pinces en X et en C telles que présentées ci-dessus, dont le bâti est de conception similaire et structure semblable entre plusieurs modèles de pinces différentes par leur forme, leur aspect, leur taille, leur capacité en effort de serrage, et/ou la cinématique du bras mobile (pince de type C ou X), de sorte à rendre possible une synergie dans l'approvisionnement et la gestion des bâtis.

L'invention concerne tout particulièrement une conception dans laquelle le bâti est commun (même référence de composant) pour toute une gamme de pinces à souder par résistance comprenant aussi bien des pinces avec une cinématique de type X que de type C.

Les avantages d'une construction utilisant un bâti semblable et même, de préférence, identique sont nombreux. Ainsi, à titre non limitatif, une telle construction autorise d'importantes synergies et simplifications dans l'approvisionnement, la gestion et le stockage des composants d'une gamme de pinces. De plus, l'invention favorise l'utilisation de nombreux autres composants communs entre les différentes tailles de pinces et permet une très grande modularité des pinces.

Egalement, cette conception permet facilement, en tout ou partie pour la gamme considérée de pinces, des opérations de montage, des postes et des outillages d'assemblage communs, et ceci tout particulièrement indépendamment de la cinématique de la pince (en C ou en X).

D'autres avantages et caractéristiques de l'invention ressortiront de la description donnée ci-dessous, à titre non limitatif, d'exemples de réalisation décrits en référence aux dessins annexés sur lesquels :
- la figure 1 est une vue schématique en élévation latérale d'une pince en C de l'état de la technique, déjà décrite ci-dessus,
- les figures 2a et 2b sont des vues analogues à la figure 1 de deux variantes de pinces en X de l'état de la technique, décrites ci-dessus,
- les figures 3 à 11 sont des vues représentant des exemples de pinces suivant l'invention, parmi lesquelles :
- les figures 3, 4 et 5 sont des vues schématiques partielles, respectivement en élévation latérale, en plan et de face d'une pince en C d'une gamme de pinces selon l'invention ;
- les figures 6, 7 et 8 sont des vues schématiques partielles respectivement analogues aux figures 3, 4 et 5 d'une pince en X, sur la base d'un bâti semblable, et idéalement identique, à celui de la pince en C des figures 3, 4 et 5 et appartenant à la même gamme de pinces, et

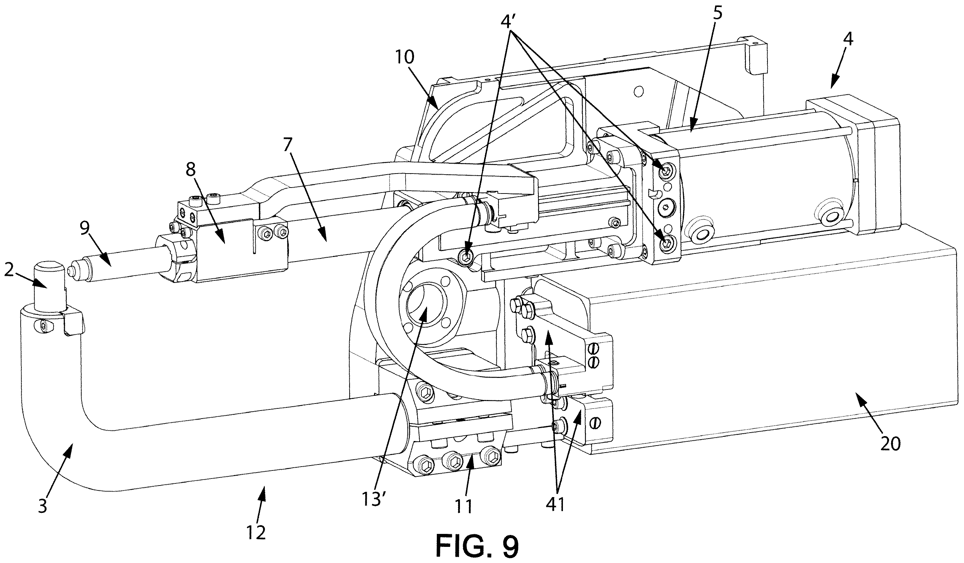

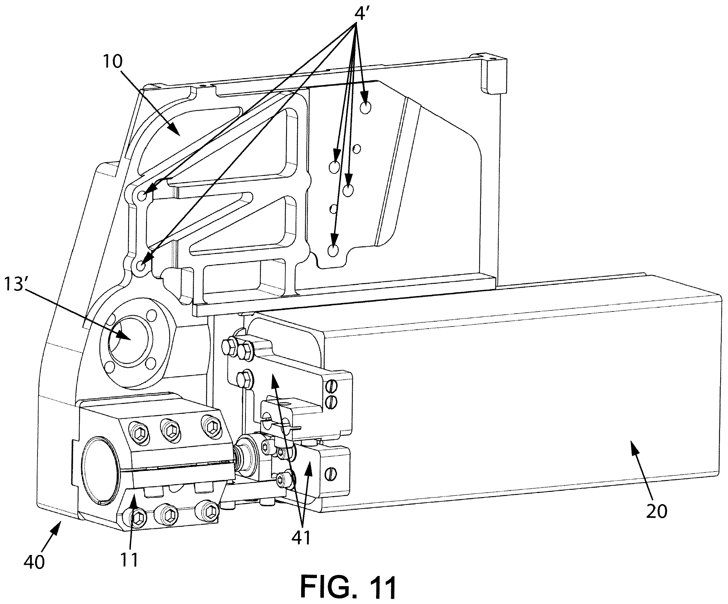

- les figures 9, 10 et 11 sont des vues en perspective représentant un exemple de pinces de cinématiques différentes en C et en X respectivement sur les figures 9 et 10, qui, conformément à l'invention, utilisent un bâti et un sous-ensemble de pièces selon la figure 11, qui sont identiques et communs aux pinces d'une même gamme.

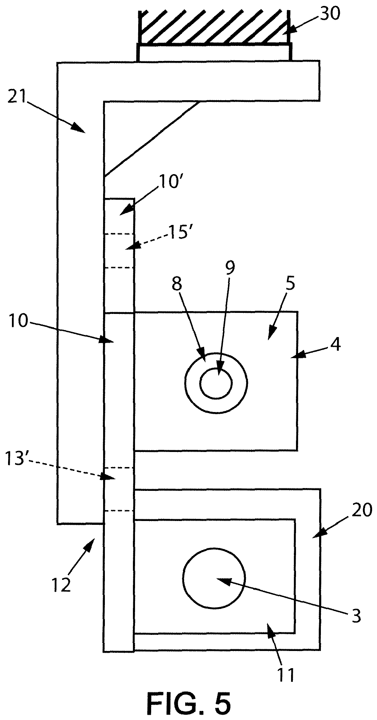

La figure 3 représente, en vue de côté, une pince en C avec, pour assurer le soudage électrique par points d'un assemblage de tôles 1, une électrode d'extrémité fixe 2 montée à l'extrémité d'un bras fixe 3 qui, par l'intermédiaire d'un support d'emmanchement 11, est lié rigidement à un bâti 10, réalisé sous la forme d'un flanc latéral supportant, en porte-à-faux au-dessus du support 11, le corps 5 d'un actionneur de soudage 4, dont la tige 7 est solidaire en déplacement d'un bras mobile 8, dans le prolongement de ladite tige 7, et dont l'extrémité libre supporte une électrode d'extrémité mobile 9, de sorte que le bâti 10 reprend les efforts de serrage ou de soudage de la pince. Ces composants constituent un sous-ensemble 12, dit articulation, lié de façon rigide à un élément porteur 30 représenté sur la figure 5.

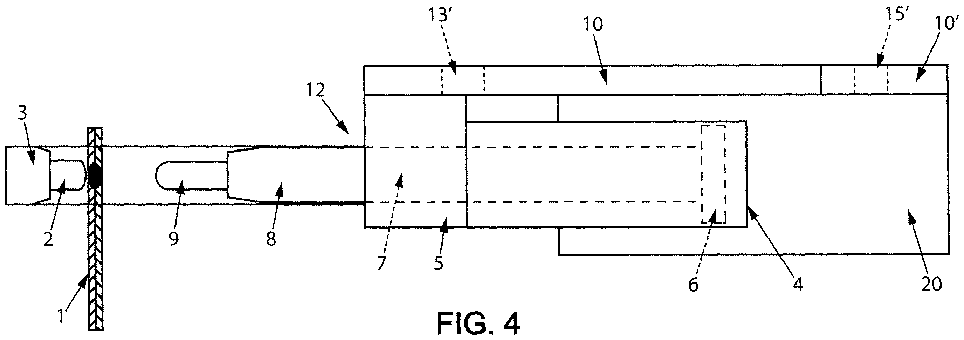

La figure 4 représente la même pince en C que la figure 3 mais en vue de dessus, qui fait bien apparaître le support en porte-à-faux, sur une même face du bâti 10, du corps 5 de l'actionneur 4 et d'un transformateur de soudage 20, sous l'actionneur 4 et derrière le support 11.

La figure 5 représente la même pince en C que les figures 3 et 4, aperçue en vue de face, avec, pour cette figure, le sous-ensemble articulation 12, lié de façon rigide à l'élément porteur 30, par l'intermédiaire d'un support en cornière 21, fixé latéralement sur le bâti 10, sur la face opposée à celle supportant le support 11, le transformateur de soudage 20 et l'actionneur 4.

Ces figures 3, 4 et 5 représentent également deux orifices ou perçages 13' et 15' ménagés dans le bâti 10, respectivement entre les attaches du support 11 et du corps 5 d'actionneur 4 sur le bâti 10 et dans un prolongement 10' supérieur et arrière du bâti 10, et qui sont nécessaires pour l'utilisation de ce même bâti 10 sur la ou les pinces en X de la même gamme de pinces, comme décrit ci-dessous en référence aux figures 6, 7 et 8.

La figure 6 représente, en vue de côté, une pince en X avec, dans cet exemple, l'électrode d'extrémité fixe 2 et le bras fixe 3 qui, par l'intermédiaire d'un support d'emmanchement 11, sont liés rigidement au bâti 10 (le même que celui de la pince des figures 3, 4 et 5) dans lequel est monté un axe de pivot 13 (logé dans l'orifice 13') autour duquel pivote un levier rigide 14 supportant le bras mobile 8 et l'électrode d'extrémité mobile 9, l'actionneur de soudage 4, également linéaire, étant pivotant par son corps 5 sur le bâti 10 autour d'un axe 15, logé dans l'orifice 15' du prolongement 10' et parallèle à l'axe 13, tandis que l'extrémité libre de la tige 7 de l'actionneur 4 actionne le levier 14, sur lequel la tige 7 pivote autour d'un axe 16 également parallèle à l'axe 13, de sorte à commander les pivotements du bras 8 et de l'électrode d'extrémité 9 mobiles par rotation du levier 14 autour de l'axe 13, par rapport au bras 3 et à l'électrode d'extrémité 2 fixes par rapport au bâti 10 reprenant les efforts de soudage, et fixé à l'élément porteur 30 (pied fixe ou robot manipulateur)

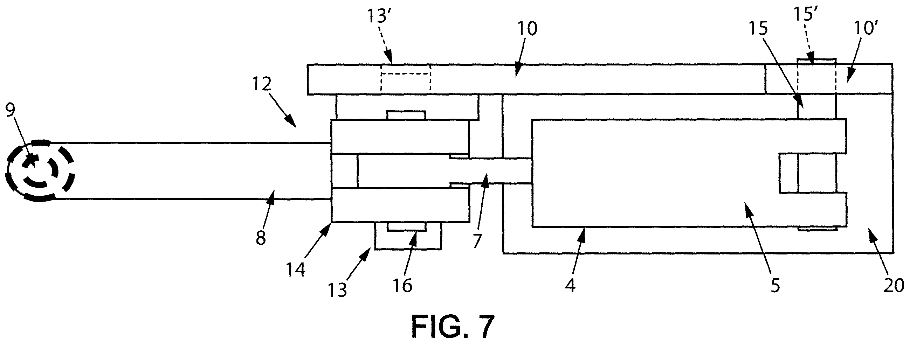

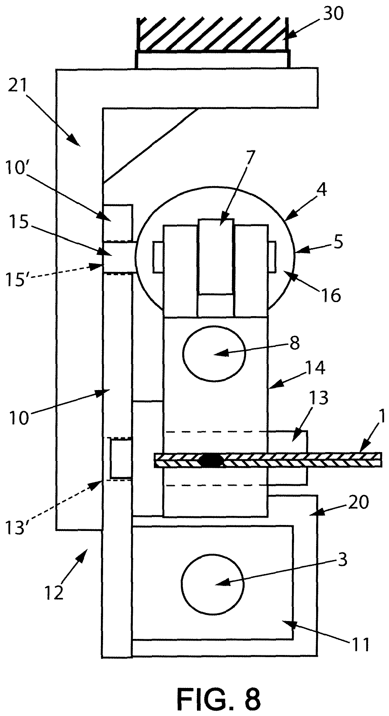

Les figures 7 et 8 représentent la même pince en X que la figure 6, aperçue respectivement en vue de dessus et en vue de face, avec, sur la figure 8, le sous-ensemble articulation 12 lié de façon rigide à l'élément porteur 30 par l'intermédiaire d'un support en cornière rigide 21, fixé latéralement sur une face du bâti 10 qui est opposée à la face sur laquelle le support 11, le transformateur de soudage 20 et l'actionneur 4 sont montés en porte-à-faux. A cet effet, ces axes 13 et 15 de pivot du levier 14 et du corps 5 d'actionneur 4 sur le bâti 10 de la pince en X peuvent être montés en porte-à-faux sur le bâti 10, tel que représenté sur les figures 7 et 8 (maintien des axes 13 et 15 sur le bâti 10 par une seule de leurs extrémités). En variante, ces axes 13 et 15 peuvent être montés par leurs deux extrémités avec un bâti en forme de U, également utilisable pour le montage du sous-ensemble articulation 12 de la pince en C des figures 3, 4 et 5, dans une autre gamme de pinces selon l'invention.

Le fait que le bâti 10 soit commun aux pinces en C et en X des figures 3, 4, 5 et 6, 7, 8 est notamment visible par la présence, sur le bâti 10 de la pince en C de la figure 3, des orifices 13' et 15' permettant la mise en place, sur la pince en X des figures 6, 7 et 8, des axes de rotation 13 et 15 nécessaires dans le cas de la cinématique de pince en X présentée.

Les figures 9, 10 et 11 représentent un autre exemple de conception modulaire de pinces à souder par résistance permettant, sur la base d'un bâti identique commun ou semblable (figure 11) de retrouver de nombreux composants communs entre deux cinématiques de pinces différentes (pince en X sur la figure 10 et pince en C sur la figure 9)

La figure 9 représente en vue isométrique une pince à souder en C avec une électrode d'extrémité fixe 2 montée à l'extrémité d'un bras fixe 3 qui, par l'intermédiaire d'un support d'emmanchement 11, est lié rigidement à un bâti 10 sous la forme d'un flanc latéral, avec un actionneur de soudage 4 également lié rigidement au bâti 10 par les fixations 4', telles que des vis, et dont la tige 7 est solidaire en déplacement d'un bras mobile 8, dans le prolongement de ladite tige, et dont l'extrémité libre supporte une électrode mobile 9. Ces composants constituent un sous-ensemble 12, dit articulation, lié de façon rigide à un élément porteur 30 comme représenté sur la figure 5. Comme le support 11 et l'actionneur 4, un transformateur de soudage 20 est vissé ou boulonné en porte-à-faux sur une face latérale du flanc constituant le bâti 10, qui reprend les efforts de serrage ou soudage de la pince.

La figure 10 représente en vue isométrique une pince de soudage en X avec, dans cet exemple, une électrode de soudage à l'extrémité fixe 2 du bras fixe 3 qui, par l'intermédiaire du même support d'emmanchement 11, est lié rigidement au même bâti 10 que dans le cas de la figure 9. Dans ce même bâti 10 est monté un axe de pivot 13 (logé dans l'orifice 13' traversant le bâti 10- voir figure 9) autour duquel pivote un levier rigide 14 supportant le bras mobile 8 et l'électrode d'extrémité mobile 9, l'actionneur de soudage 4, également linéaire, étant fixé de façon rigide par son corps 5 et les fixations 4', telles que des vis, sur une face latérale du bâti 10. Une liaison mécanique 17 adéquate, à 2 degrés de liberté, tel que, par exemple, un système de biellettes comme décrit en référence à la figure 2b est monté en rotation sur un premier axe 19, parallèle à l'axe 13, à l'extrémité libre de la tige 7 de l'actionneur 4, et sur le bras de levier 14 par un second axe 16, également parallèle à l'axe 13, de sorte à commander les pivotements du bras 8 et de l'électrode d'extrémité 9 mobiles par rotation du levier 14 autour de l'axe 13, par rapport au bras 3 et à l'électrode d'extrémité 2 fixes par rapport au bâti 10 de l'outil, lors des mouvements de translation de la tige 7 de l'actionneur de soudage 4.

Sur les figures 9 et 10, les pinces peuvent être fixées à un élément porteur par l'intermédiaire du bâti 10, ou du transformateur de soudage 20.

La figure 11 est une vue isométrique représentant un bâti 10 commun, et illustrant, sur la base de ce bâti, la modularité, les simplifications et les synergies possibles concernant de nombreuses autres pièces communes ou sous-ensembles communs 40 entre les modèles de pinces de cinématiques différentes (pinces C et X des figures 9 et 10) d'une même gamme de pinces.

Ainsi, outre le transformateur de soudage 20, on retrouve, comme pièces communes, le support d'emmanchement 11 du bras fixe (non représenté), ainsi que d'autres pièces tels que des conducteurs 41, liés au transformateur 20 et assurant la continuité électrique entre les bornes du secondaire dudit transformateur et les électrodes de soudage 2 et 9, comme décrit dans la demande de brevet français N° 06 02073 au nom de la société ARO.

De même, le bâti 10 étant commun, il devient plus facile de standardiser les supports 21, ou d'autres composants mécaniques pouvant intervenir sur la liaison entre l'outil et son élément porteur 30.

## Revendications

1. Pince à enserrer des tôles et utilisée en association avec un bras manipulateur, dit robot, et comprenant :
- un bâti (10) rigide, lié à un élément porteur (30),
- un sous-ensemble dit articulation (12), comportant :
- un premier bras (3), dit fixe,
- un second bras (8), dit mobile, et
- un actionneur principal (4), prenant appui sur ledit bâti (10) supportant ledit bras fixe (3), et apte à déplacer le bras mobile (8) par rapport au bras fixe (3), suivant un premier degré de liberté, en translation ou rotation, afin de fermer ou d'ouvrir la pince pour, respectivement, enserrer un assemblage de tôles (1) entre les bras fixe (3) et mobile (8) ou libérer l'assemblage de tôles (1),
la pince appartenant à une gamme de pinces comprenant des pinces avec une cinématique de type en C et des pinces avec une cinématique de type en X, et le bâti (10) est identique pour toutes les pinces de ladite gamme de pinces, **caractérisée en ce qu'**un orifice (13') est ménagé dans le bâti (10), adapté pour qu'un axe (13) soit logé dans ledit orifice (13') autour duquel un levier rigide (14) supportant le bras (8) mobile peut pivoter, **en ce que** ledit bâti (10) se présente sous la forme d'un flanc latéral, les composants formant le sous-ensemble (12) d'articulation sont montés sur une même face latérale du bâti, la face opposée du bâti étant adaptée pour la fixation à l'élément porteur (30), et **en ce qu'**un second orifice (15') est ménagé dans le bâti (10), adapté pour qu'un deuxième axe (15) soit logé dans ledit second orifice (15') et autour duquel l'actionneur principal (4) peut pivoter.

2. Pince à enserrer des tôles selon la revendication 1 **caractérisée par le fait que** le bâti (10) est utilisé comme moyen de fixation d'un support (21) ou de tout autre composant ou assemblage de composants (20) mécanique permettant d'assurer une liaison rigide entre ledit bâti (10) et l'élément porteur (30).

3. Pince à enserrer des tôles selon la revendication 1 **caractérisée par le fait que** la pince est dépourvue de fonction d'équilibrage détalonnage.

4. Pince à enserrer des tôles selon l'une quelconque des revendications 1 à 3, **caractérisée par le fait que** la pince est de type en X, sur laquelle la rotation du levier rigide (14) supportant le bras mobile (8) et son extrémité mobile (9) autour de l'axe de pivot (13) est commandée par ledit actionneur principal (4) qui est linéaire, pivotant par son corps (5) sur le bâti (10) autour d'un axe (15) parallèle à l'axe de pivot (13), tandis que l'extrémité libre de la tige (7) de l' actionneur (4) actionne le levier (14), sur lequel la tige (7) pivote autour d'un autre axe (16) également parallèle à l'axe de pivot (13) et lié au bras de levier (14), de sorte à commander les pivotements du bras (8) et de l'extrémité (9) mobiles par rotation autour de l'axe de pivot (13) par rapport au bras (3) et à l'extrémité (2) fixes par rapport au bâti (10) de la pince en X.

5. Pince à enserrer des tôles selon l'une quelconque des revendications 1 à 3, **caractérisée par le fait que** la pince est de type en X, sur laquelle la rotation du levier rigide (14) supportant le bras mobile (8) et son extrémité mobile (9) autour de l'axe de pivot (13) est commandée par ledit actionneur principal (4), qui est linéaire, fixé de façon rigide par son corps (5) et des fixations (4'), sur le bâti (10), une liaison mécanique (17) à 2 degrés de liberté, tel qu'un système de biellettes (18) monté en rotation sur l'extrémité libre de la tige (7) par un premier axe (19) parallèle à l'axe de pivot (13) et sur le bras de levier (14) par un second axe (16) également parallèle à l'axe de pivot (13), étant apte à commander les pivotements du bras (8) et de l'extrémité (9) mobiles par rotation autour de l'axe de pivot (13) par rapport au bras (3) et à l'extrémité (2) fixes par rapport au bâti (10) de la pince lors des mouvements de translation de la tige (7) de l'actionneur principal (4).

6. Pince à enserrer des tôles selon l'une quelconque des revendications 4 et 5, **caractérisée par le fait que** l'un au moins des axes de rotation (13, 15) de la pince en X est fixé sur le bâti (10) par une seule de ses extrémités selon un montage en porte-à-faux.

7. Pince à enserrer des tôles selon l'une quelconque des revendications 1 à 6, **caractérisée par le fait que** le bâti (10) est constitué d'un assemblage rigide de pièces.

8. Pince à enserrer des tôles selon l'une quelconque des revendications 1 à 6, **caractérisée par le fait que** le bâti (10) est monobloc.

9. Pince à enserrer des tôles selon l'une quelconque des revendications 1 à 8 **caractérisée par le fait que** le bâti (10) est utilisé pour le positionnement et la fixation des composants du sous-ensemble articulation (12), dont le bâti peut lui-même faire partie dans le cas d'une pince sans fonction d' équilibrage/détalonnage.

10. Pince à enserrer des tôles selon la revendication 1 **caractérisée par le fait que** le bâti (10) est utilisé pour le positionnement et la fixation d'autres composants de la pince ne faisant pas partie du sous-ensemble articulation (12).

11. Pince à enserrer des tôles selon l'une quelconque des revendications 1 à 10, **caractérisée par le fait qu'**il s'agit d'une pince modulaire, avec une pluralité de composants et/ou sous-ensembles (40) autres que le bâti (10) et qui sont communs aux différentes pinces de ladite gamme.

12. Pince à enserrer des tôles selon l'une quelconque des revendications 1 à 11, **caractérisée par le fait qu'**il s'agit d'une pince à souder par résistance, et les extrémités respectivement des bras fixe (3) et mobile (8) sont des électrodes de soudage (2, 9), un transformateur de soudage (20) étant de préférence intégré à la pince et fixé sur le bâti (10).

13. Gamme de pinces à enserrer des tôles, **caractérisée par le fait qu'**elle comprend une pluralité de pinces selon l'une quelconque des revendications 1 à 12, dont au moins une pince est de type en C et au moins une autre de type en X, toutes les pinces de la gamme ayant des bâtis (10) identiques.

## Patentansprüche

1. Zange zum Klemmen von Blechen, die in Kombination mit einem Manipulatorarm, Roboter genannt, verwendet wird und aufweist:
- einen mit einem Trägerelement (30) verbundenen steifen Rahmen (10),
- eine sogenannte Gelenk-Untergruppe (12) mit
* einem ersten, sogenannten stationären Arm (3),
* einem zweiten, sogenannten mobilen Arm (8) und
* einem Hauptaktuator (4), der auf dem Rahmen (10), der den stationären Arm (3) trägt, aufliegt und den mobilen Arm (8) bezüglich des stationären Arms (3) gemäß eines ersten Freiheitsgrads verschieben oder drehen kann, um die Zange zu schließen oder zu öffnen, um eine Anordnung von Blechen (1) zwischen dem stationären Arm (3) und dem mobilen Arm (8) zu klemmen bzw. die Anordnung von Blechen (1) freizugeben,
wobei die Zange zu einer Zangen-Produktfamilie gehört, die Zangen mit einer Kinematik des C-Typs und Zangen mit einer Kinematik des X-Typs aufweist, wobei der Rahmen (10) für alle Zangen der Zangen-Produktfamilie gleich ist,
**dadurch gekennzeichnet, dass** eine Öffnung (13') in dem Rahmen (10) ausgespart ist, die konfiguriert ist, um in der Öffnung (13') eine Achse (13) anzuordnen, um welche sich ein steifer Hebel (14), der den mobilen Arm (8) trägt, drehen kann, und
dadurch, dass der Rahmen (10) in Form einer Seitenflanke vorliegt, wobei die Komponenten, die die Gelenk-Untergruppe (12) bilden, an einer gleichen Seitenfläche des Rahmens angebracht sind, wobei die andere Fläche des Rahmens für die Befestigung an dem Trägerelement (30) konfiguriert ist, und
dadurch, dass eine zweite Öffnung (15') in dem Rahmen (10) ausgespart ist, die konfiguriert ist, um in der zweiten Öffnung (15') eine zweite Achse (15) anzuordnen, um die sich der Hauptaktuator (4) drehen kann.

2. Zange zum Klemmen von Blechen nach Anspruch 1, **dadurch gekennzeichnet, dass** der Rahmen (10) als Mittel zum Befestigen einer Stütze (21) oder irgendeiner anderen mechanischen Komponente oder Komponentenanordnung (20) verwendet wird, die erlaubt, eine steife Verbindung zwischen dem Rahmen (10) und dem Trägerelement (30) sicherzustellen.

3. Zange zum Klemmen von Blechen nach Anspruch 1, **dadurch gekennzeichnet, dass** die Zange nicht mit einer Auswuchtung/Hinterschneidung-Funktion versehen ist.

4. Zange zum Klemmen von Blechen nach einem der Ansprüche 1 bis 3, **dadurch gekennzeichnet, dass** die Zange des X-Typs ist, an welcher die Rotation des steifen Hebels (14), der den mobilen Arm (8) und dessen mobiles Ende (9) trägt, um die Drehachse (13) von dem Hauptaktuator (4) gesteuert wird, der linear ist, sich mit seinem Körper (5) an dem Rahmen (10) um eine zur Drehachse (13) parallele Achse (15) dreht, während das freie Ende der Stange (7) des Aktuators (4) den Hebel (14) betätigt, an welchem die Stange (7) sich um eine andere Achse (16) dreht, die ebenfalls parallel zur Drehachse (13) ist und mit dem Hebelarm (14) verbunden ist, um so die Drehungen des mobilen Arms (8) und Endes (9) durch Rotation um die Drehachse (13) bezüglich des stationären Arms (3) und Endes (2) bezüglich des Rahmens (10) der X-Zange zu steuern.

5. Zange zum Klemmen von Blechen nach einem der Ansprüche 1 bis 3, **dadurch gekennzeichnet, dass** die Zange des X-Typs ist, an welcher die Rotation des steifen Hebels (14), der den mobilen Arm (8) und dessen mobiles Ende (9) trägt, um die Drehachse (13) von dem Hauptaktuator (4) gesteuert wird, der linear ist, mit seinem Körper (5) und Befestigungen (4') auf steife Weise an dem Rahmen (10) befestigt ist, wobei eine mechanische Verbindung (17) mit zwei Freiheitsgraden, beispielsweise ein System von Schwingarmen (18), das mit einer zur Drehachse (13) parallelen ersten Achse (19) an dem freien Ende der Stange (7) und mit einer zur Drehachse (13) ebenfalls parallelen zweiten Achse (16) an dem Hebelarm (14) drehbar angebracht ist, fähig ist, die Drehungen des mobilen Arms (8) und Endes (9) durch Rotation um die Drehachse (13) bezüglich des stationären Arms (3) und Endes (2) bezüglich des Rahmens (10) der Zange bei Translationsbewegungen der Stange (7) des Hauptaktuators (4) zu steuern.

6. Zange zum Klemmen von Blechen nach einem der Ansprüche 4 und 5, **dadurch gekennzeichnet, dass** mindestens eine der Rotationsachsen (13, 15) der X-Zange nur mit einem einzigen ihrer Enden gemäß einer Cantilever-Montage an dem Rahmen (10) angebracht ist.

7. Zange zum Klemmen von Blechen nach einem der Ansprüche 1 bis 6, **dadurch gekennzeichnet, dass** der Rahmen (10) aus einem steifen Zusammenbau von Stücken besteht.

8. Zange zum Klemmen von Blechen nach einem der Ansprüche 1 bis 6, **dadurch gekennzeichnet, dass** der Rahmen (10) aus einem einzigen Stück ist.

9. Zange zum Klemmen von Blechen nach einem der Ansprüche 1 bis 8, **dadurch gekennzeichnet, dass** der Rahmen (10) zum Positionieren und Befestigen von Komponenten der Gelenk-Untergruppe (12) verwendet wird, ein Teil derer der Rahmen selbst sein kann im Fall einer Zange ohne Auswuchtung/Hinterschneidung-Funktion.

10. Zange zum Klemmen von Blechen nach Anspruch 1, **dadurch gekennzeichnet, dass** der Rahmen (10) zum Positionieren und Befestigen anderer Komponenten der Zange verwendet wird, die nicht Teil der Gelenk-Untergruppe (12) sind.

11. Zange zum Klemmen von Blechen nach einem der Ansprüche 1 bis 10, **dadurch gekennzeichnet, dass** es sich um eine modulare Zange handelt, die zusätzlich zu dem Rahmen (10) mehrere andere Komponenten und/oder Untergruppen (40) aufweist, die den unterschiedlichen Zangen der Produktfamilie gemeinsam sind.

12. Zange zum Klemmen von Blechen nach einem der Ansprüche 1 bis 11, **dadurch gekennzeichnet, dass** es sich um eine Zange zum Widerstandsschweißen handelt, und die Enden des stationären (3) bzw. mobilen (8) Arms Schweißelektroden (2, 9) sind, wobei ein Schweißtransformator (20) vorzugsweise in die Zange integriert und an dem Rahmen (10) befestigt ist.

13. Produktfamilie von Zangen zum Klemmen von Blechen, **dadurch gekennzeichnet, dass** sie mehrere Zangen nach einem der Ansprüche 1 bis 12 aufweist, von denen mindestens eine Zange des C-Typs ist und mindestens eine andere des X-Typs ist, wobei die Zangen der Produktfamilie gleiche Rahmen (10) haben.

## Claims

1. Clamp for gripping sheet metal and used in association with a manipulating arm, called a robot, and including:
- a rigid frame (10), associated with a support element (30),
- a so-called articulation subassembly (12), comprising:
-- a first so-called stationary arm (3),
-- a second so-called mobile arm (8), and
-- a main actuator (4), bearing against said frame (10) supporting said stationary arm (3), and capable of moving the mobile arm (8) with respect to the stationary arm (3), according to a first degree of freedom, in translation or rotation, so as to close or open the clamp, in order, respectively, to grip a sheet metal assembly (1) between the stationary (3) and mobile (8) arms or release the sheet metal assembly (1),
the clamp belonging to a line of clamps including clamps with C-type kinematics and clamps with X-type kinematics, and the frame (10) is identical for all of the clamps of said line of clamps,
**characterised in that** an orifice (13') is produced in the frame (10), suitable for a pivot pin (13) to be mounted in the orifice (13') around which a rigid lever (14), supporting the mobile arm (8), can pivot, **in that in that** the frame (10) is in the form of a lateral flank, the components forming the articulation subassembly being laterally attached to a same face of the frame, the opposite face of the frame being suitable for connection to the support element (30), and **in that** a second orifice (15') is produced in the frame 10, suitable for a second pivot pin (15) to be mounted in the second orifice (15') around the main actuator (4) can pivot.

2. Clamp for gripping sheet metal according to claim 1, **characterised in that** the frame (10) is used as means for attaching a support (21) or any other component or assembly of mechanical components (20) enabling a rigid connection to be ensured between said frame (10) and the support element (30).

3. Clamp for gripping sheet metal according to claim 1, **characterised in that** the clamp does not have a balancing/relief function.

4. Clamp for gripping sheet metal according to any one of claims 1 to 3, **characterised in that** the clamp is an X-clamp , in which the rotation of a rigid lever (14) supporting the mobile arm (8) and its mobile end (9) around a pivot pin (13) is controlled by said main actuator (4), which is linear, pivoting by its body (5) on the frame (10) around a pin (15) parallel to the pivot pin (13), while the free end of the rod (7) of the actuator (4) actuates the lever (14), on which the rod (7) pivots around another pin (16) also parallel to the pivot pin (13) and connected to the lever arm (14), so as to control the pivoting of the arm (8) and the end (9) mobile in rotation around the pivot pin (13) with respect to the arm (3) and the end (2) stationary with respect to the frame (10) of the X-clamp.

5. Clamp for gripping sheet metal according to any one of claims 1 to 3, **characterised in that** the clamp is an X-clamp, in which the rotation of a rigid lever (14) supporting the mobile arm (8) and its mobile end (9) around a pivot pin (13) is controlled by said main actuator (4), which is linear, rigidly attached by its body (5) and attachments (4'), on the frame (10), in which a mechanical connection (17) with two degrees of freedom, such as a connecting link system (18) mounted in rotation on the free end of the rod (7) by a first pin (19) parallel to the pivot pin (13) and on the lever arm (14) by a second pin (16) also parallel to the pivot pin (13), is capable of controlling the pivoting of the arm (8) and the end (9) mobile in rotation around the pivot pin (13) with respect to the arm (3) and the end (2) stationary with respect to the frame (10) of the clamp during translation movements of the rod (7) of the main actuator (4).

6. Clamp for gripping sheet metal according to either one of claims 4 and 5, **characterised in that** at least one of the rotation pins (13, 15) of the X-clamp is attached to the frame (10) by a single one of its ends according to a cantilever assembly.

7. Clamp for gripping sheet metal according to any one of claims 1 to 6, **characterised in that** the frame (10) consists of a rigid assembly of parts.

8. Clamp for gripping sheet metal according to any one of claims 1 to 6, **characterised in that** the frame (10) is formed in one piece.

9. Clamp for gripping sheet metal according to any one of claims 1 to 8, **characterised in that** the frame (10) is used to position and attach components of the articulation subassembly (12), of which the frame can itself form a part in the case of a clamp without a balancing/relief function.

10. Clamp for gripping sheet metal according to claim 1, **characterised in that** the frame (10) is used to position and attach other components of the clamp not forming part of the articulation subassembly (12).

11. Clamp for gripping sheet metal according to any one of claims 1 to 10, **characterised in that** it is a modular clamp, with a plurality of components and/or subassemblies (40) other than the frame (10) and which are common to the various clamps of said line.

12. Clamp for gripping sheet metal according to any one of claims 1 to 11, **characterised in that** it is a resistance welding clamp, and the ends, respectively, of the stationary (3) and mobile (8) arms are welding electrodes (2, 9), a welding transformer (20) being preferably integrated in the clamp and attached to the frame (10).

13. Line of clamps for gripping sheet metal, **characterised in that** it includes a plurality of clamps according to any one of claims 1 to 12, of which at least one clamp is a C-clamp and of which at least another is an X-clamp, in which all of the clamps of the line have identical frames (10).
